# EUROPEAN PATENT SPECIFICATION

(11) **EP 1 552 402 B1**
(45) Date of publication and mention of the grant of the patent: **12.09.2007**
(21) Application number: 03807931.5
(22) Date of filing: 07.10.2003
(51) Int. Cl.: G06F 13/00

(54) **INTEGRATED CIRCUIT AND METHOD FOR SENDING REQUESTS**
INTEGRIERTER SCHALTKREIS UND VERFAHREN ZUM VERSENDEN VON ANFRAGEN
CIRCUIT INTEGRE ET PROCEDE D'EMISSION DE DEMANDES

(30) Priority: 08.10.2002 EP 02079196; 02.07.2003 EP 03101972
(43) Date of publication of application: 13.07.2005
(73) Proprietor: Koninklijke Philips Electronics N.V., 5621 BA Eindhoven (NL)
(72) Inventor: RADULESCU, Andrei, NL-5656 AA Eindhoven (NL); GOOSSENS, Kees, G., W., NL-5656 AA Eindhoven (NL)
(74) Representative: Eleveld, Koop Jan
(86) International application number: PCT/IB2003/004322
(87) International publication number: WO 2004/034590

(56) References cited:
- EP-A- 0 935 375
- KUMAR S ET AL: "A Network on Chip Architecture and Design Methodology" VLSI ON ANNUAL SYMPOSIUM, IEEE COMPUTER SOCIETY ISVLSI 2002 PITTSBURGH, PA, USA 25-26 APRIL 2002, LOS AALMITOS, CA, USA,IEEE COMPUT. SOC, US, 25 April 2002 (2002-04-25), pages 117-124, XP002263346 ISBN: 0-7695-1486-3
- CHU-SING YANG ET AL: "Building an adaptable, fault tolerant, and highly manageable web server on clusters of non-dedicated workstations" IEEE, 21 August 2000 (2000-08-21), pages 413-420, XP010516422
- GUERRIER P ET AL: "A Generic Architecture for On-Chip Packet-Switched Interconnections" IEEE, 27 March 2000 (2000-03-27), pages 250-256, XP010377472

## Description

The invention relates to an integrated circuit as described in the introductory part of claim 1. The invention also relates to a method for sending requests as described in the introductory part of claim 7.

### Acknowledgement of Prior Art

The concept of Networks-on-Chip (NOC) is known from the article "A Network on Chip Architecture and Design Methodology" by Shashi Kumar et al., Proceedings of the IEEE Computer Society Annual Symposium on VLSI, 2002. The article discloses an NOC architecture which consists of an m × n mesh of switches and resources placed on the slots formed by the switches. A resource may be a processor core, a DSP core, an FPGA block, a dedicated HW block, a mixed signal block, or a memory block. The switches route and buffer messages between the resources. Each switch is connected to four other neighbouring switches through input and output channels. A channel consists of two one-directional point-to-point buses between two switches or a resource and a switch. Switches may have internal queues to handle congestion. Resources operate asynchronously with respect to each other. Synchronization is provided by synchronization primitives, which are implemented by passing messages around the network.

The article "Building an Adaptable, Fault Tolerant, and Highly Manageable Web Server on Clusters of Non-dedicated Workstations" by Chu-Sing Yang and Mon-Yen Luo, Taiwan, 2000, discloses a Web server on a cluster of non-dedicated workstations. Such a server can recruit non-dedicated nodes in a network dynamically in response to load bursts.

### Introduction

A request-response transaction model is frequently used as a communication model for systems on integrated circuits. The transaction model can either be deployed in systems using a bus architecture or in systems using a network architecture, in order to establish communication between the modules. Using such a transaction model in a network on an integrated circuit provides backward compatibility with existing interconnects, for example buses.

The transaction model uses requests and responses. A request comprises a command (e.g. read, write) with parameters, such as an address or a burst length, and optionally the request comprises a data part. Responses carry an acknowledgement indicating the result of the execution of a request, and optionally they carry a data part.

Another communication model is the message-passing model, which uses messages and acknowledgements. Such an acknowledgement indicates the receipt of a message rather than the execution of a request.

In networks on an integrated circuit a first module (also referred to as master, master module or initiator) typically has access to an address space, wherein addresses identify locations within second modules (also referred to as slaves, slave modules or targets). Depending on circumstances, it may be necessary to address two or more second modules simultaneously. For example, this is needed when the execution of a request by two or more second modules needs to be started simultaneously and the starting is performed by writing to start registers mapped in the address space; all these start registers should be written to at the same time. Another example is when data is replicated to different memories to be processed locally. In these cases the first module replicates the request and the resulting plurality of replicated requests is sent to the second modules. This has the disadvantage that the first module cannot send a request to more than one second module using a single address, but it must replicate the request and send the replicated requests to the second modules using a different address for each second module. This causes a large burden on the first module.

It is an object of the invention to provide an integrated circuit and a method of the kind set forth which reduce the burden on the first module. In order to achieve the said object the integrated circuit is characterized by the characterizing portion of claim 1 and the method is characterized by the characterizing portion of claim 7.

The burden on the first module can be reduced by providing a network which is capable of replicating a request into at least two replicated requests, and which is capable of sending the replicated requests to the second modules. If the network can perform these tasks, then the first module can be relieved of them.

An embodiment is defined in claim 2, wherein the network comprises a facility for mapping at least one special address (also referred to as multicast address) onto at least two further addresses. This enables the first module to send a single request to a single address instead of replicating the request and sending the replicated requests to various addresses.

It is also possible to map one or more multicast addresses onto one or more other multicast addresses; this embodiment is defined in claim 3. This has the constraint that no recurrence should occur.

Depending on circumstances, it is convenient to specify a range of multicast addresses once instead of specifying a number of separate multicast addresses. The embodiment defined in claim 4 provides a facility for defining such a range of multicast addresses.

Another embodiment is defined in claim 5, wherein a multicast connection is deployed to relieve the first module of the replication and dispatch tasks. The first module can send a single request comprising a connection identifier referring to such a connection; the network then replicates the single request into at least two replicated requests and sends the replicated requests through the connection to the second modules.

One or more dedicated nodes in the network may be used to replicate the single request and send the replicated requests. The embodiment defined in claim 6 comprises a network interface to replicate the single request and send the replicated requests.

The invention overcomes the shortcomings of multicast transactions in networks on an integrated circuit, because the network can provide a multicast request to at least two second modules in response to a single request from the first module.

It is noted that US 2002/0093964 discloses a protocol for routers (data switching nodes) and supervisors to exchange data. The router can send commands to the supervisor including a learn/delete/search multicast address command. The supervisor provides information to the router about multicast packets that must be routed. However, the supervisor does not perform an actual multicast; the router must perform this multicast. A method of multicasting of the kind set forth is not disclosed in US 2002/0093964.

The present invention is described in more detail with reference to the drawings, in which:
Fig. 1 illustrates a network on an integrated circuit;
Fig. 2 illustrates a method of multicasting wherein at least two replicated requests are sent from a first module to at least two second modules;
Fig. 3 illustrates how addresses are used to address the second modules;
Fig. 4 illustrates a method of multicasting according to the invention;
Fig. 5 illustrates how multicast addresses are used according to the invention;
Fig. 6 illustrates a multicast range;
Fig. 7 illustrates a multicast connection according to the invention.

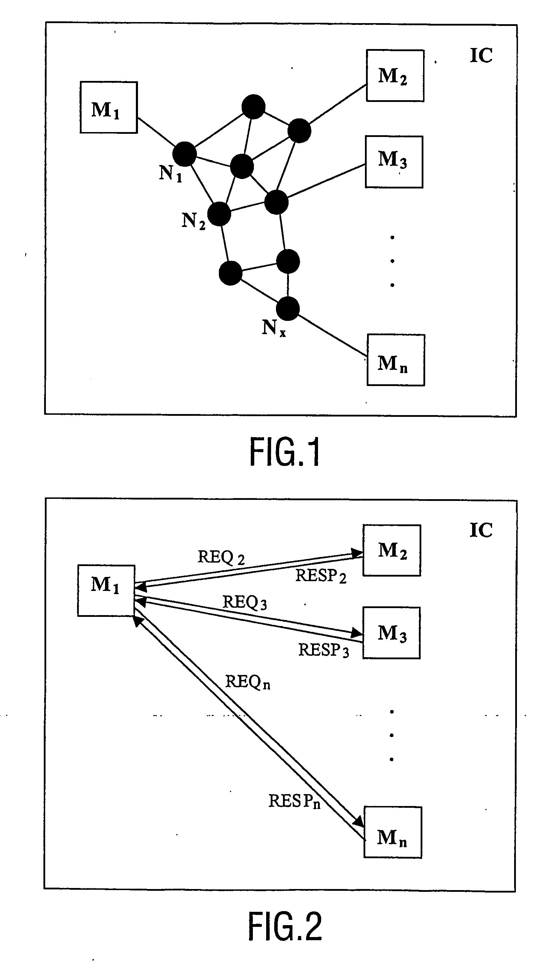

Fig. 1 schematically shows an integrated circuit IC which deploys a network for communication between a plurality of modules M₁, M₂, M₃ up to and including Mₙ. Examples of modules are central processing units (CPUs), application specific processors, memories and memory controllers. The network comprises nodes N₁, N₂ up to and including Nₓ, and connections between the nodes. This network architecture provides the interconnect between the modules and can be deployed as an alternative for the conventional bus architecture on an integrated circuit.

Fig. 2 illustrates a method of multicasting wherein at least two replicated requests REQ₂, REQ₃ up to and including REQₙ are sent from a first module M₁ to at least two second modules M₂, M₃ up to and including Mₙ. The second modules M₂, M₃ up to and including Mₙ send back responses RESP₂, RESP₃ up to and including RESPₙ to the first module M₁. The disadvantage of this method of multicasting is that the first module M₁ cannot send a request to the two second modules M₂, M₃ up to and including Mₙ using a single address, but it must replicate the request and send the replicated requests REQ₂, REQ₃ up to and including REQₙ to the second modules, using a different address for each second module. This leads to a large burden on the first module M₁.

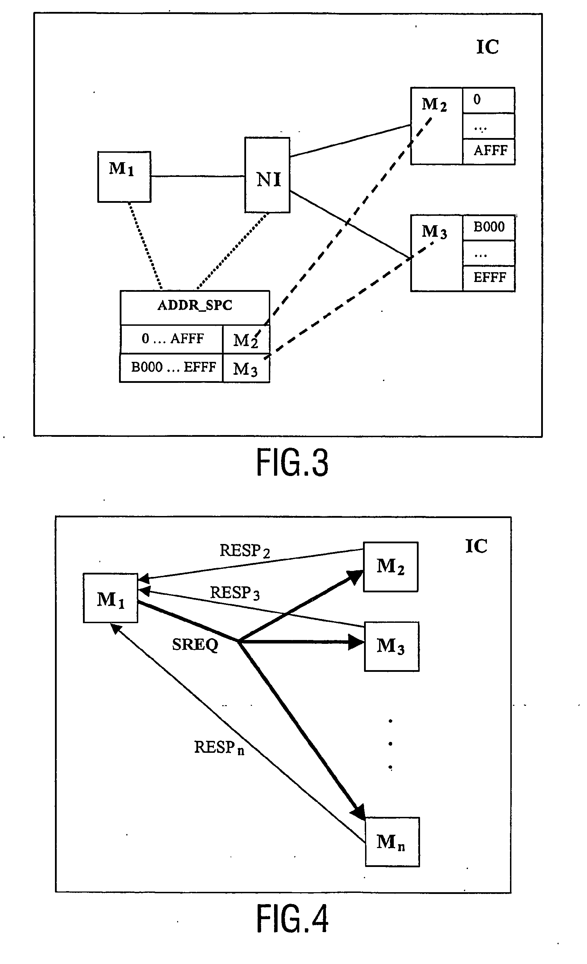

Fig. 3 illustrates how addresses can be used to address the second modules M₂, M₃ up to and including Mₙ. An address space ADDR_SPC comprises a range of addresses 0 up to and including EFFF. A first sub range thereof, comprising addresses 0 up to and including AFFF, is associated with second module M₂, and a second sub range, comprising addresses B000 up to and including EFFF, is associated with second module M₃. In order to send a request to both second modules M₂ and M₃, the first module M₁ must replicate the request and send one replicated request to an address in the first sub range 0 up to and including AFFF, for example to address 3A98, and another replicated request to an address in the second sub range B000 up to and including EFFF, for example to address C350.

Fig. 4 illustrates a method of multicasting according to the invention. Instead of sending replicated requests to the second modules M₂, M₃ up to and including Mₙ, the first module M₁ can send a single request SREQ which is replicated by the-network, and distributed to two or more second modules. This can be realized, for example, using one or more special addresses to specify the addresses of the second modules. Such a special address, also referred to as a multicast address, is mapped onto the addresses of the second modules M₂, M₃ up to and including Mₙ in the address space. The network performs the replication of the single request SREQ, resulting in at least two replicated requests SREQ₂, SREQ₃ up to and including SREQₙ, which are sent to the second modules M₂, M₃ up to and including Mₙ. The network may deploy a network interface for this purpose; alternatively one or more dedicated nodes may be used.

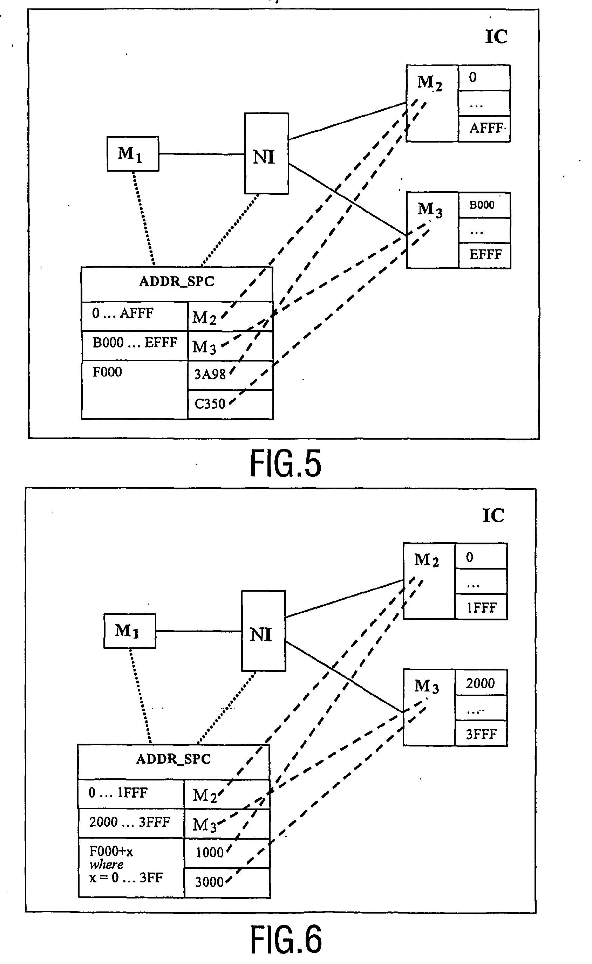

Fig. 5 illustrates a mapping between a multicast address and two addresses which are associated with the second modules M₂ and M₃ respectively. The multicast address must be configured such that it is associated with at least one of the addresses of each of the second modules M₂ and M₃ ; this may be done by the boot code which configures the network or it may be done at runtime. In this example the address space ADDR_SPC comprises a range of regular addresses 0 up to and including EFFF, which are associated directly with the second modules. It is assumed that a network interface NI, which is comprised in the network, performs the replication of a request and sends the replicated requests to the second modules M₂ and M₃.

A special address F000, also referred to as a multicast address, is mapped onto two regular addresses: address 3A98 which is in the sub range 0 up to and including AFFF associated with second module M₂, and address C350 which is in the sub range B000 up to and including EFFF associated with second module M₃. Such a mapping may take place by using a lookup table or by a logical operation, for example. Now the first module M₁ can send a request to the multicast address F000, and then the request is replicated by the network interface NI and sent to the addresses 3A98 and C350, which are associated with second module M₂ and second module M₃ respectively.

Note that it is possible that a multicast address is mapped onto another multicast address, but recurrence must be avoided in the sense that a first multicast address should not be mapped onto a second multicast address which in turn is mapped onto the first multicast address. Note also that it is possible that a multicast address is mapped onto two or -more-addresses within a single second module.

In addition, it is possible to define a multicast range, which is illustrated in Fig. 6. Instead of specifying a large-number of multicast addresses which are mapped onto regular addresses corresponding to second modules M₂ and M₃, it is possible to specify once a complete range of multicast addresses. In this example the range of multicast addresses F000+x, where 'x' is a variable having values in the range 0 up to and including 3FF, is mapped onto addresses 1000+x (which correspond to second module M₂) and onto addresses 3000+x (which correspond to second module M₃). Hence, multicast address F000 is mapped onto addresses 1000 and 3000, multicast address F001 is mapped onto addresses 1001 and 3001, multicast address F002 is mapped onto addresses 1002 and 3002, etc. The last multicast address in the range is F3FF, which is mapped onto addresses 13FF and 33FF. This multicast range has the advantage that it is not necessary to specify 1024 separate multicast addresses.

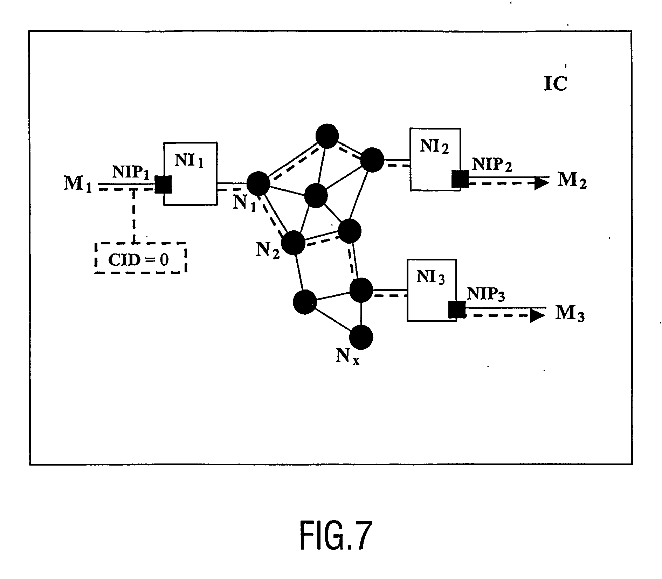

Alternatively, a multicast connection can be deployed to reduce the burden on the first module M₁, which is illustrated in Fig. 7. In general, connections are used in networks to describe and identify communication with different properties, such as guaranteed throughput, latency and jitter, ordered delivery, or flow control. In this context, a connection is used to identify a first module and a second module or a number of second modules. The connection comprises physical means and control information required to enable a transaction between the first module and the second module(s). The path between the first module and the second module(s) can be determined at runtime, at (re)configuration time and/or it can be predetermined by the boot code. The required control information comprises a mapping between a connection identifier and one or more network interface ports (NIPs). The control information may be stored in the network nodes (i.e. routers and network interfaces) and/or it may be contained in the header of a packet, for example.

In this example a multicast connection is set up from a first module M₁ to two second modules M₂ and M₃. Connections require that a connection identifier CID is sent along with a request. A request on such a connection can then automatically be sent to all the second modules of the connection. Note that the requests still carry addresses which are used as internal addresses for the second modules, i.e. addresses which identify locations within the second modules, but which are not used to replicate and distribute requests to the second modules.

A connection is set up during a configuration stage of the network. Typically the network is configured by the boot code but it may also be configured at runtime. The connection identifier CID has a value which identifies the connection; in this case the value is '0'. In the example shown the value of the connection identifier CID is mapped onto network interface ports NIP₂ and NIP₃ via the mapping 0 → {NIP₂, NIP₃}. The network interface ports NIP₂ and NIP₃ form part of network interfaces NI₂ and NI₃ respectively; note that one network interface may have more than one network interface port and several network interface ports may be associated with a single address. These network interface ports NIP₂ and NIP₃ are in turn associated with the addresses of the second modules M₂ and M₃. Now the connection identifier CID can be sent along with a request; the network interface NI₁ can replicate the request and send the replicated requests through the connection. Via the network interface ports NIP₂ and NIP₃ the request can be delivered at the addresses of the second modules M₂ and M₃.

## Claims

1. Integrated circuit (IC) comprising a network and a plurality of modules (M₁, M₂, M₃ up to and including Mₙ), which are arranged to communicate to each other via the network, wherein the network is arranged to establish transactions between a first module (M₁) and at least two second modules (M₂, M₃ up to and including Mₙ),
wherein the network is arranged to replicate a single request (SREQ) from the first module (M₁) into at least two replicated requests, and that the network is arranged to send the replicated requests to the second modules (M₂, M₃ up to and including Mₙ), wherein
**characterized in that** the network comprises an address space (ADDR_SPC) and a facility for mapping at least one multicast address (F000) onto at least two further addresses in a range of addresses (0 up to and including EFFF).

2. Integrated circuit (IC) according to claim 1, wherein the network further comprises a facility for mapping at least one first multicast address onto at least one second multicast address, provided that the second multicast address is not mapped onto the first multicast address.

3. Integrated circuit (IC) according to claim 1, wherein the network further comprises a facility for mapping a range of multicast addresses (F000+x) onto at least two ranges (1000+x, 3000+x) of further addresses.

4. Integrated circuit (IC) according to claim 1, wherein the single request (SREQ) comprises a connection identifier (CID) which identifies a multicast connection.

5. Integrated circuit (IC) according to claim 1, wherein a network interface (NI) is arranged to perform the replication of the single request (SREQ) into the replicated requests, and wherein the network interface is arranged to send the replicated requests to the second modules (M₂, M₃ up to and including Mₙ).

6. Method for sending requests in an integrated circuit (IC) comprising a network and a plurality of modules (M₁, M₂, M₃ up to and including Mₙ), which communicate to each other via the network, wherein the network establishes transactions between a first module (M₁) and at least two second modules (M₂, M₃ up to and including Mₙ),
wherein the network replicates a single request (SREQ) from the first module (M₁) into at least two replicated requests, and that the network sends the replicated requests to the second modules (M₂, M₃ up to and including Mₙ), **characterized in that** the network comprises an address space (ADDR_SPC) and a facility for mapping at least one multicast address (F000) onto at least two further addresses in a range of addresses (0 up to and including EFFF).

## Patentansprüche

1. Integrierte Schaltung (IC) mit einem Netzwerk und einer Anzahl Module (M₁, M₂, M₃ bis einschließlich Mₙ), die dazu vorgesehen sind, über das Netzwerk miteinander zu kommunizieren, wobei das Netzwerk vorgesehen ist Transaktionen zwischen einem ersten Modul (M₁) und wenigstens zwei zweiten Modulen (M₂, M₃ bis einschließlich Mₙ) durchzuführen,
wobei das Netzwerk zum Kopieren eines einzigen Antrags (SREQ) von dem ersten Modul (M₁) in wenigstens zwei kopierte Anträge vorgesehen ist, und das Netzwerk zum Senden der kopierten Anträge zu den zweiten Modulen (M₂, M₃ bis einschließlich Mₙ) vorgesehen ist, **dadurch gekennzeichnet, dass** das Netzwerk einen Adressenraum (ADDR_SPC) und eine Möglichkeit aufweist, wenigstens eine Multicast-Adresse (F000) auf wenigstens zwei weiteren Adressen in einem Gebiet von Adressen (0 bis einschließlich EFFF) abzubilden.

2. Integrierte Schaltung (IC) nach Anspruch 1, wobei das Netzwerk weiterhin eine Möglichkeit aufweist wenigstens eine erste Multicast-Adresse auf wenigstens einer zweiten Multicast-Adresse abzubilden, unter der Bedingung aber, dass die zweite Multicast-Adresse nicht auf der ersten Multicast-Adresse abgebildet ist.

3. Integrierte Schaltung (IC) nach Anspruch 1, wobei das Netzwerk weiterhin eine Möglichkeit aufweist, ein Gebiet von Multicast-Adressen (F000+x) auf wenigstens zwei Gebieten (1000+x, 3000+x) weiterer Adressen abzubilden.

4. Integrierte Schaltung (IC) nach Anspruch 1, wobei der einzige Antrag (SREQ) einen Verbindungsidentifizierer (CID) aufweist, der eine Multicast-Verbindung identifiziert.

5. Integrierte Schaltung (IC) nach Anspruch 1, wobei eine Netzwerkschnittstelle (NI) vorgesehen ist zum Durchführen der Kopierung des einzigen Antrags (SREQ) in die kopierten Anträge, und wobei die Netzwerkschnittstelle vorgesehen ist, die kopierten Anträge den zweiten Modulen (M₂, M₃ bis einschließlich Mₙ) zuzusenden.

6. Verfahren zum Zusenden von Anträgen in einer integrierten Schaltung (IC) mit einem Netzwerk und einer Anzahl Module (M₁, M₂, M₃ bis einschließlich Mₙ), die über das Netzwerk miteinander kommunizieren, wobei das Netzwerk Transaktionen zwischen einem ersten Modul (M₁) und wenigstens zwei zweiten Modulen (M₂, M₃ bis einschließlich Mₙ) durchführt, wobei das Netzwerk einen einzigen Antrag (SREQ) aus dem ersten Modul (M₁) in wenigstens zwei kopierte Anträge kopiert, und das Netzwerk die kopierten Anträge den zweiten Modulen (M₂, M₃ bis einschließlich Mₙ) zusendet, **dadurch gekennzeichnet, dass** das Netzwerk einen Adressenraum (ADDR_SPC) und eine Möglichkeit aufweist, wenigstens eine Multicast-Adresse (F000) auf wenigstens zwei weiteren Adressen in einem Gebiet von Adressen (0 bis einschließlich EFFF) abzubilden.

## Revendications

1. Circuit intégré (IC : Integrated Circuit) comprenant un réseau et une pluralité de modules (M₁, M₂, M₃ à Mₙ inclus), qui sont conçus pour communiquer les uns avec les autres via le réseau, le réseau étant conçu pour établir des transactions entre un premier module (M₁) et au moins deux deuxièmes modules (M₂, M₃ à Mₙ inclus), le réseau étant conçu pour dupliquer une demande unique (SREQ) provenant du premier module (M₁) en au moins deux demandes dupliquées, et le réseau étant conçu pour envoyer les demandes dupliquées aux deuxièmes modules (M₂, M₃ à Mₙ inclus), **caractérisé en ce que** le réseau comprend un espace d'adressage (ADDR_SPC) et un système permettant de mettre en correspondance au moins une adresse de multidiffusion (F000) avec au moins deux adresses supplémentaires dans une plage d'adresses (0 à EFFF inclus).

2. Circuit intégré (IC) selon la revendication 1, **caractérisé en ce que** le réseau comprend en outre un système permettant de mettre en correspondance entre au moins une première adresse de multidiffusion et au moins une deuxième adresse de multidiffusion, sous réserve que la deuxième adresse de multidiffusion n'ait pas de correspondance avec la première adresse de multidiffusion.

3. Circuit intégré (IC) selon la revendication 1, **caractérisé en ce que** le réseau comprend en outre un système permettant de mettre en correspondance une plage d'adresse de multidiffusion (F000+x) et au moins deux plages (1000+x, 3000+x) d'adresses supplémentaires.

4. Circuit intégré (IC) selon la revendication 1, **caractérisé en ce que** la demande unique (SREQ) comprend un identificateur de connexion (CID) qui identifie une connexion de multidiffusion.

5. Circuit intégré (IC) selon la revendication 1, dans lequel une interface de réseau (NI) est conçue pour effectuer une duplication de la demande unique (SREQ) en les demandes dupliquées et en ce que l'interface de réseau est conçue pour envoyer les demandes dupliquées aux deuxièmes modules (M2, M3 à Mₙ inclus).

6. Procédé d'envoi de demandes dans un circuit intégré comprenant un réseau et une pluralité de modules (M₁, M₂, M₃ à Mₙ inclus), qui communiquent les uns avec les autres via le réseau, le réseau établissant des transactions entre le premier module (M₁) et au moins deux deuxièmes modules (M₂, M₃ à Mₙ inclus), le réseau dupliquant une demande unique (SREQ) provenant du premier module (M₁) en au moins deux demandes dupliquées, et le réseau envoyant les demandes dupliquées aux deuxièmes modules (M₂, M₃ à Mₙ inclus), **caractérisé en ce que** le réseau comprend un espace d'adressage (ADDR_SPC) et un système permettant de mettre en correspondance au moins une adresse de multidiffusion (F000) et au moins deux adresses supplémentaires dans une plage d'adresses (0 à EFFF inclus).
